# EUROPÄISCHE PATENTSCHRIFT

(11) **EP 4 032 684 B1**
(45) Veröffentlichungstag und Bekanntmachung des Hinweises auf die Patenterteilung: **02.10.2024**
(21) Anmeldenummer: 22152181.8
(22) Anmeldetag: 19.01.2022
(51) Int. Cl.: B29C 63/00, B29C 63/30, B29C 63/48, B65D 90/10

(54) **VERFAHREN ZUR SANIERUNG EINES DOMSCHACHTS, SOWIE EIN DOMSCHACHT**
DOME SHAFT AND METHOD FOR RENOVATING A DOME SHAFT
PROCÉDÉ D'ASSAINISSEMENT D'UN PUITS DE DÔME ET PUITS D'INSPECTION

(30) Priorität: 20.01.2021 DE 102021101158
(43) Veröffentlichungstag der Anmeldung: 27.07.2022
(73) Patentinhaber: KH Tank & Korrosionsschutz e.K., 44388 Dortmund (DE)
(72) Erfinder: Heine, Michael, 58300 Wetter (DE)
(74) Vertreter: Kalkoff & Partner Patentanwälte mbB

(56) Entgegenhaltungen:
- DE-A1- 19 946 158
- DE-A1- 3 808 553
- US-A1- 2020 173 596

## Beschreibung

Die Erfindung betrifft ein Verfahren zur Sanierung eines Domschachts, sowie einen Domschacht mit zur Abdichtung abschnittsweise ausgekleideten Domschachtinnenflächen.

Aus der DE 199 46 158 A1 ist Verfahren zum Sanieren von mit wassergefährdenden Stoffen in Berührung kommenden künstlichen Vertiefungen bekannt. Dabei wird eine Grundierung auf Epoxydharzbasis vorgesehen, auf welche nach einer Trocknung eine Schicht auf Polyesterharzbasis großflächig aufgetragen. Darin wird dann eine Glasfasermatte eingebettet. Darauf wird nach Aushärtung noch mindestens einmal wieder eine Schicht auf Polyesterharzbasis aufgetragen in die auch wieder eine Glasfasermatte eingebettet wird. Abschließend wird eine letzte Schicht auf Polyesterharzbasis aufgetragen und zur Aushärtung gebracht.

Domschächte mit nachträglich eingebrachter Abdichtung sind bspw. aus der DE 202 14 501 U1 bekannt. Dabei werden Innenwände und/oder Boden des entsprechenden Domschachts mit vorkonfektionierten Dichtungsbahnen ausgelegt. Es wird zudem offenbart, dass die Dichtungsbahnen jeweils aus mit einem Polysulfid imprägnierten Trägerbahnen bestehen. Diese Trägerbahnen wiederum sind dabei als kunststoffgebundenes Granulat ausgebildet und sollen sowohl porös als auch federelastisch sein. Überdies wird aufgezeigt, dass bspw. in den Kanten zwischen Boden und Seitenwänden jeweils Trägerbahnen auf Stoß aneinander liegen. Die Stoßbereiche werden dann mit einer Vergussmasse abgedichtet, wobei dabei die Vergussmasse mit einem Gewebe, bspw. einem Polyestervlies, verstärkt sein kann.

Ferner ist aus der DE 10 2011 109 153 A1 ein Verfahren zum Abdichten von gemauerten oder betonierten Domschächten bekannt. Die Abdichtung erfolgt dabei insbesondere gegenüber aus dem Perimeterbereich drückendem Grund- und/oder Oberflächenwasser mittels einer erdaushubfreien Außenabdichtung und einer Innenabdichtung. Zur Außenabdichtung werden dabei zuerst etwaige Leckagestellen identifiziert, indem der Domschacht mit Alkalisilikat-Wasserglas geflutet wird, welche durch solche Leckagen in den Perimeterbereich ausfließt. Nachdem der Domschacht leergepumpt und danach gespült wurde, wird dieser wiederum mit einem Härtekatalysator geflutet. Es wird dabei offenbart, dass der Härtekatalysator entlang derselben Fließstrecken wie das Alkalisilikat-Wasserglas durch die vorgenannten etwaigen Leckagen fließt. Nach einer Verweildauer wird der Domschacht wiederum geleert und gespült. Die Leckagen sollen dann bereits durch ausgehärtetes Wasserglas von außen abgedichtet sein, wobei zur Innenabdichtung eine Zementschlämme auf Wände und Boden des Domschachts aufgebracht wird.

Solche Maßnahmen zur nachträglichen Abdichtung von Domschächten werden insbesondere im Rahmen der Wartung von Erdlagertanks eingesetzt. So müssen bspw. die unterirdischen Kraftstofflagertanks von Tankstellen regelmäßigen behördlichen Kontrollen und, im Falle vorhandener Mängel, Wartungen bzw. Nachbesserungen unterzogen werden. Das Ziel ist es einerseits die Betriebssicherheit der Tankanlage und andererseits den Schutz der Umwelt, insbesondere des Grundwassers, zu gewährleisten.

Verfahren zur nachträglichen Abdichtung von Domschächten der bereits bekannten Art weisen insbesondere in Übergangsbereichen von Boden zu Wand und/oder von jeweils einem der beiden zu in den Domschacht hineinragende Armaturen und/oder Rohrleitungen Schwachpunkte auf. Es werden dabei gerade dort bekanntermaßen Anhäufungen von gießbaren Dichtungsmitteln ausgebracht, was zum einen kosten- und zeitintensiv, zum anderen aber auch anfällig für Fehlstellen ist. Zudem fehlt es bekannten Verfahren an Flexibilität. Mit steigender Komplexität der Ausgestaltung eines Domschachts, insbesondere hinsichtlich der nicht immer einheitlichen Anordnung vorgenannter Armaturen bzw. Rohrleitungen im Domschacht, erhöht sich auch die Zahl der abzudichtenden Übergangsbereiche. So potenziert sich die Gewichtung der damit jeweils einhergehenden vorgenannten Nachteile.

Der Erfindung liegt daher die Aufgabe zugrunde, ein Verfahren und einen Domschacht vorzuschlagen, mit welchen auf einfache und kostengünstige Weise eine sichere Abdichtung für Domschächte her- bzw. bereitgestellt werden kann.

Die Erfindung löst die Aufgabe mit einem Verfahren nach Anspruch 1 und einem Domschacht nach Anspruch 9. Die abhängigen Ansprüche beziehen sich auf vorteilhafte Ausführungsformen.

Das erfindungsgemäße Verfahren bezieht sich auf die Sanierung eines Domschachts. In einem Schritt des erfindungsgemäßen Verfahrens werden Domschachtinnenflächen des Domschachts gegenüber der Domschachtumgebung zur Identifizierung von Fehlstellen auf Dichtigkeit inspiziert. Im Rahmen der Erfindung kann der Domschacht insbesondere als schachtartiger Aufbau auf einem Dom eines Erdlagertanks verstanden werden, welcher an einem unteren Ende an einem Teil des Tanks, bspw. an dem Dom und/oder einer Außenhülle des Tanks, zumindest anliegt und an einem oberen Ende in eine Erdoberfläche übergeht. Der Domschacht weist dabei bspw. Schachtwände und einen Schachtboden auf, wobei die Schachtwände nach außen bspw. erdberührt ausgebildet sind (Perimeterbereich) und der Schachtboden nach außen bzw. unten entsprechend dem unteren Ende des Domschachts einen Teil des Tanks kontaktiert. Es ist im Rahmen der Erfindung zudem möglich, dass ein Teil der Außenhülle des Tanks (Tankscheitel) den Schachtboden ausbildet. Somit weist der Domschacht in Richtung von Erdreich bzw. Erdlagertank gerichtete Domschachtaußenflächen, sowie nach innen in den Domschacht hinein gerichtete Domschachtinnenflächen auf.

Als Domschachtumgebung kann entsprechend im Rahmen der Erfindung zum einen der Perimeterbereich verstanden werden, zum anderen aber auch der Dom des Domschachts und/oder ein Anteil der Außenhülle des dazugehörigen Erdlagertanks, also derjenige Bereich, welcher jeweils an die Domschachtaußenflächen angrenzt. Als Fehlstellen können dabei entsprechend leckagebehaftete Bereiche verstanden werden, welche bspw. den direkten Durchtritt von Flüssigkeiten aus dem Inneren des Domschachts an die Domschachtumgebung erlauben. Solche Fehlstellen können im Rahmen der Erfindung bspw. als Risse, Löcher o.ä. ausgebildet sein, unabhängig davon, ob diese durch mechanische Einwirkung, fehlerhafte Herstellung, chemische oder physikalische Korrosion o.ä. entstanden sind.

In einem weiteren Schritt des erfindungsgemäßen Verfahrens werden die Domschachtinnenflächen des Domschachts zumindest im Bereich der Fehlstellen mit einem faserigen Abdichtmaterial abschnittsweise ausgekleidet. Im Rahmen der Erfindung können dabei insbesondere Kunststofffasern, bzw. Geflechte aus Kunststofffasersträngen zum Einsatz kommen, wobei alternativ auch entsprechende natürliche Fasern denkbar sind. Das Abdichtmaterial kann überdies in unterschiedlichen Darreichungsformen, bspw. bahnartig, mattenartig, patchartig o.ä. genutzt werden.

In einem weiteren Schritt wird das Abdichtmaterial zur Erzeugung einer zusammenhängenden Auskleidung gefügt. Im Rahmen der Erfindung kommen aus fertigungstechnischer Sicht beim Fügen insbesondere Schweißen und Kleben in Frage um die einzelnen Stücke an Abdichtmaterial miteinander zu verbinden. Bei einem wie vorgenannt als Geflecht aus Kunstfasersträngen ausgebildetem Abdichtmaterial können so bspw. einzelne Geflechtstücke miteinander verklebt oder verschweißt werden.

In einem letzten Schritt des erfindungsgemäßen Verfahrens wird dann die Auskleidung durch Aufbringen einer Polymerbeschichtung versiegelt. Eine solche Beschichtung kann im Rahmen der Erfindung insbesondere aus gieß- und/oder sprühfähigen Lacken (PU, Bootslack), Silikaten (Wasserglas) o.ä. ausgebildet sein. Damit kann die Auskleidung insbesondere wasserdicht und vor mechanischer Beschädigung geschützt werden.

Das erfindungsgemäße Verfahren zur Sanierung eines Domschachts weist eine hohe Effizienz in Hinblick auf den Kostenfaktor und eine leichte Ausführbarkeit auf. Das Verfahren ist flexibel auf Domschächte verschiedenster Bauformen und Ist-Zuständen anwendbar und ermöglicht dabei die nachträgliche Abdichtung eines Domschachts sowohl gegenüber sich im Domschacht ansammelnden, als auch gegenüber aus der Domschachtumgebung in diesen eindringenden Flüssigkeiten. Das erfindungsgemäße Verfahren ist zudem derart schonend, dass dieses auch in flamm- und/oder explosionsgefährdeten Bereichen einsetzbar ist. Gegenüber bekannten Abdichtungsverfahren weist sich das erfindungsgemäße Verfahren somit als vorteilhaft aus.

Es ist möglich, dass die Domschachtinnenflächen ausgehend von dem Schachtboden in Richtung des oberen Endes des Domschachts teilweise mit dem faserigen Abdichtmaterial ausgekleidet werden. Dabei kann es vorteilhaft sein, das Abdichtmaterial derart anzuordnen, dass die resultierende Auskleidung in denjenigen Bereichen, in welchen die Domschachtinnenflächen ineinander übergehen, im Wesentlichen ununterbrochen ausgebildet ist. Unterbrechungen in diesen Bereichen könnten zu besonders sensiblen Schwachstellen führen, welche mit erhöhtem Aufwand gesichert werden müssen. Erfindungsgemäß wird daher die Auskleidung in Kantbereichen der Domschachtinnenflächen und/oder in Übergangsbereichen zu die Domschachtinnenflächen durchdringenden Armaturen übergehend aufgekantet. Unter Armaturen können hier insbesondere Rohrleitungen, Flansche, Füllstutzen usw. des entsprechenden Erdlagertanks verstanden werden.

Dabei ist es möglich, dass in einem Kantbereich von einer ersten Domschachtinnenfläche zu einer zweiten Domschachtinnenfläche mehrere Stücke Abdichtmaterial nebeneinander über den Kantbereich übergehend aufgekantet sind. Bevorzugt sind diese dabei jedoch dann derart ausgerichtet, dass etwaige Stoßbereiche zwischen den einzelnen Stücken an Abdichtmaterial im Wesentlichen quer zum Kantbereich ausgerichtet sind. Die Stoßbereiche zwischen zwei Stücken Abdichtmaterial stellen dabei z.B. auch diejenigen Bereiche dar, in denen die entsprechenden Stücke miteinander gefügt werden. Werden die beispielhaften zwei Stücke Abdichtmaterial bspw. verschweißt, so entsteht im vorgenannten Beispiel eine Schweißnaht, welche bspw. quer zum Kantbereich verläuft und diesen nur einem Punkt der Aufkantung schneidet. Es wird also bevorzugt vermieden, dass sich ein Stoßbereich zwischen zwei Stücken Abdichtmaterial ergibt, welcher auf dem Kantbereich liegt.

Um lange Standzeiten der Auskleidung zu gewährleisten, kann es zudem vorteilhaft sein, den Schachtboden auch dann zu sanieren, wenn die einzigen im Rahmen der Inspektion auffälligen Fehlstellen an den Domschachtinnenflächen der Schachwänden zu finden sind. Dies ist bspw. darin begründet, dass sich in den Domschacht eintretendes Wasser oder sich im Domschacht bildendes Kondensat zuerst auf dem Schachtboden ansammelt. Die Auskleidung kann entsprechend von dem Schachtboden ausgehend wannenartig ausgebildet sein, so dass zudem auch Verschüttungen aufgefangen werden, die bspw. beim Befüllen des zugehörigen Erdlagertanks anfallen. Damit wird auch verhindert, dass solche sich ansammelnden Flüssigkeitsmengen den Schachtboden bzw. im schlimmsten Fall sogar die Außenhülle des Erdlagertanks angreifen. Gemäß einer weiteren bevorzugten Ausführungsform werden daher die Domschachtinnenflächen bis zu einer vorgegebenen Schutzhöhe mit dem Abdichtmaterial ausgekleidet.

Dabei kann die Schutzhöhe zum einen bspw. mit der Ortsbestimmung der Fehlstellen an den Domschachtinnenflächen korrelieren. Zum anderen kann die Schutzhöhe aber auch präventiv gewählt werden, wenn bspw. eine Gefährdung von höhergelegenen Bereichen in Betracht kommt. Höher bezieht sich hier auf den höheren Abstand zum Schachtboden. Als Schutzhöhe kommt hier also bspw. eine Auskleidung der Domschachtinnenflächen ausgehend vom Schachtboden bis zu einer Höhe im Bereich von 5cm - 25cm, bevorzugt 7cm - 20cm, besonders bevorzugt 9cm - 15cm in Betracht. Wie vorangehend erwähnt sind höhere Auskleidungen im Einzelfall durchaus möglich.

Um eine wie vorgenannte Gefährdung höhergelegener Bereiche bestimmen zu können, kann z.B. im Rahmen der Inspektion eine zumindest abschnittsweise Bestimmung der Materialstärke der Domschachtinnenflächen vorteilhaft sein. Wird dabei bspw. ein Mindestwert an Materialstärke in einem Bereich unterschritten, so kann es vorteilhaft sein diesen Bereich zumindest prophylaktisch ebenfalls zu sanieren, so dass sich diese Bereiche nicht zu Fehlstellen entwickeln. Gemäß einer weiteren bevorzugten Ausführungsform werden daher potentielle Fehlstellen durch Messen von IST-Werten der Materialstärke und Vergleichen der IST-Werten mit vorgegebenen SOLL-Werten der Materialstärke identifiziert. Eine solche Messung könnte mit üblichen Verfahren, insbesondere per Ultraschalldickenmessung, vorgenommen werden.

Weiter kann zur Beurteilung des Zustands des Domschachts auch die Dichtigkeit als Parameter herangezogen werden. Die Messung der Dichtigkeit kann bspw. mit bekannten Vakuum- oder Überdruckverfahren erfolgen.

Es ist möglich, bspw. nach einer einleitenden Inaugenscheinnahme der Domschachtinnenflächen zur Einschätzung von Korrosionsfortschritt und zur Identifizierung von makroskopischen Fehlstellen, zusätzlich eine Dichtigkeitsmessung wie vorgenannt durchzuführen, um auch mikroskopische Fehlstellen zu lokalisieren. Dies kann in einer nicht vorgegebenen Reihenfolge auch mit der vorgenannten Messung der Materialstärke der Domschachtinnenflächen kombiniert werden, um ebenfalls potentielle Fehlstellen zu identifizieren.

Es ist möglich, dass das faserige Abdichtmaterial allein aufgrund seiner Darreichungsform nicht flüssigkeitsdicht ist, weswegen wie vorgenannt eine nachträgliche Polymerbeschichtung vorgesehen ist. Um das Abdichtmaterial jedoch auch von der der jeweiligen Domschachtinnenwand zugewandten Seite vor dem Einfluss von Flüssigkeiten und/oder Chemikalien allgemein zu schützen, kann es vorteilhaft sein, das Abdichtmaterial vor dem Auskleiden vorzubehandeln. Gemäß einer weiteren bevorzugten Ausführungsform wird das Abdichtmaterial daher vor dem Auskleiden in einem Harz getränkt. Als solches Harz können Natur- oder Kunstharze zum Einsatz kommen. Als solche Kunstharze kommen dabei insbesondere Epoxidharze, Vinylesterharze (bzw. Epoxy-Vinylesterharze) oder Polyesterharze in Betracht.

Das Abdichtmaterial wird bspw. zuerst in einem solchen Harz getränkt, dann erfolgt damit das Auskleiden der Domschachtinnenflächen, bevor dann das Abdichtmaterial in Position vorgetrocknet und dann zur Auskleidung gefügt wird. Bevor die vorgenannte Polymerbeschichtung aufgetragen wird, wird die Auskleidung ausgehärtet. Das Abdichtmaterial wird dabei bevorzugt mittels der Tränkung in dem Harz zumindest imprägniert und/oder chemikalienbeständiger. Weiter kann der entstehende Verbund aus faserigem Abdichtmaterial und Harz erhöhte mechanische Widerstandsfähigkeiten aufweisen. Eine gleichwertige Alternative zur vorgenannten Art der Tränkung ist es, zuerst den Bereich der entsprechenden Domschachtinnenflächen, welche ausgekleidet werden sollen, mit dem entsprechenden Harz zu versehen, das Abdichtmaterial aufzubringen und dann dieses oberflächlich nochmals mit dem Harz zu versehen. Unabhängig von der Absorptionsfähigkeit des Abdichtmaterials kann damit schlussendlich eine analoge Auskleidung erzeugt werden.

Zur Trocknung des entsprechend eingesetzten Harzes kommen verschiedene Methoden in Frage, wobei dies bspw. durch UV-Bestrahlung geschehen kann. Im Falle eines ungesättigten Polyesterharzes (UP-Harz) kann jedoch bspw. eine chemisch induzierte Trocknung mit Hilfe einer Kombination aus einem Kobaltsalz als Beschleuniger und einem Peroxid, insbesondere Wasserstoffperoxid, zur Induktion einer radikalischen Polymerisation genutzt werden. Gesättigte Polyesterharze werden hingegen unter Einsatz von Melamin, Epoxid oder Isocyanaten getrocknet, während Epoxidharze gut über längere Zeit an der Luft trocknen können.

Abhängig von der gewünschten Art der Beständigkeit der Auskleidung, kann insbesondere die Stärke der Polymerbeschichtung der Auskleidung variieren. Eine exakte Ermittlung der notwendigen Stärke kann ggf. ein Kostenersparnis bedeuten, gegenüber einer ggf. zu großen Standarddicke. Gemäß einer weiteren bevorzugten Ausführungsform wird die Auskleidung daher mittels einer Polymerbeschichtung mit einer Dicke zwischen 1500µm und 2500µm, bevorzugt zwischen 1750µm und 2250µm, besonders bevorzugt zwischen 1900µm und 2100µm versiegelt.

Um eine grundlegende Beständigkeit der Auskleidung zu gewährleisten kann es vorteilhaft sein, dass das faserige Abdichtmaterial als Basis der Auskleidung bereits hinsichtlich des Einsatzgebiets vorteilhafte Eigenschaften aufweist. Obwohl wie vorangehend erwähnt sowohl Natur- als auch Kunstfasern möglicherweise Grundlage für das Abdichtmaterial darstellen können, kann es beim Einsatz in Domschächten von insbesondere chemikalien- bzw. mineralölführenden Erdlagertanks vorteilhaft sein, auf eine dazu ausgebildete chemisch beständige Kunstfaser zurückzugreifen. Als solche kommen bspw. insbesondere Fasern aus Polyphenylensulfid, Polytetrafluorethylen oder Polyacryl in Frage. Es kann jedoch dahingehend weiter vorteilhaft sein, eine Kunstfaser zu wählen, welche überdies gute mechanische Eigenschaften aufweist, umweltfreundlich und insbesondere thermisch beständig ist.

Gemäß einer weiteren bevorzugten Ausführungsform ist das faserige Abdichtmaterial daher als Carbonfaser und die Auskleidung als Carbonfasermatte ausgebildet. Die Carbonfasermatte, auch Kohlenstofffaser- oder Kohlefasermatte genannt, stellt dabei bevorzugt ein Geflecht aus Carbonfasersträngen dar. Ferner ist es möglich, dass die Carbonfasermatte als Vlies ausgebildet ist, bei welchem Carbonfasern unterschiedlicher Länge und Ausrichtung in einem ungeordneten Gebilde gebunden sind. Die Carbonfasermatte weist weiter insbesondere eine ausreichende Elastizität auf, um im Wesentlichen bruchfrei einem wie vorgenannten Kant- und/oder Übergangsbereich angeformt werden zu können. Die Carbonfasermatte kann für sich genommen durchaus flüssigkeitsdurchlässig sein. Dabei kann bspw. die Tränkung der Carbonfasermatte in einem Harz der zuvor beschriebenen Art insbesondere diese imprägnieren. Weiter kann die Carbonfasermatte mittels einer solchen Tränkung adhäsiv mit den Domschachtinnenflächen in Wirkverbindung gebracht werden.

Wird ein Domschacht bspw. per amtlichem Gutachten im Rahmen Mineralöl lagernder Erdtanks von z.B. Tankstellen als sanierungsbedürftig ausgewiesen, so kann es notwendig sein, dass der Domschacht eine Vorbehandlung erfährt, um diesen sanierungstauglich zu machen. Solche Vorbehandlungen können bspw. das Trockenlegen des Domschachts bei etwaig vorhandenen stehenden Flüssigkeitsmengen sein. Dabei werden stehende Flüssigkeitsmengen abgesaugt und ggf. fachgerecht entsorgt, wonach dann der Domschacht z.B. mittels einer Heizung ausgetrocknet werden kann. Augenfällig von Korrosion befallene Bereiche können dann bspw. mit einem pneumatischen Nadelentroster o.ä. vorgereinigt werden. Die Säuberung der Domschachtinnenflächen kann im Rahmen einer Vorbehandlung insbesondere deswegen vorteilhaft sein, weil das Abdichtmaterial bzw. die Auskleidung auf gesäuberten Oberflächen besser angeordnet werden kann.

Gemäß einer weiteren bevorzugten Ausführungsform werden die Domschachtinnenflächen daher zur Vorbereitung mit Trockeneispellets bestrahlt, denen besonders bevorzugt ein Strahlmittel-Additiv beigemischt wird. Die Bestrahlung der Domschachinnenflächen mittels zumindest Trockeneispellets hat den Vorteil, dass damit funkenfrei und trotzdem abrasiv gereinigt werden kann. Als Strahlmittel-Additiv kann dabei bspw. Strahlsand eingesetzt werden, was die abrasive Wirkung noch erhöht. Die Trockeneispellets werden dabei mit einem Strahldruck zwischen 4bar und 10bar, bevorzugt zwischen 5bar und 9bar, besonders bevorzugt zwischen 6bar und 8bar auf die Domschachtinnenflächen geschickt. Dabei ist es möglich, dass in Bereichen der Domschachtinnenflächen mit bspw. aufgrund fortschreitender Korrosion nur gering verbliebener Materialstärke mittels der vorgenannten Bestrahlung Fehlstellen freigelegt bzw. mitunter sogar erst erzeugt werden. In diesem Fall kann es zudem vorteilhaft sein, die entsprechenden Bereiche bzw. bspw. den gesamten Schachtboden mittels einer wie vorgenannten Ultraschalldickenmessung zu inspizieren und bei weitreichender Unterschreitung des entsprechenden SOLL-Werts ggf. eine vollumfängliche Auskleidung zu erzeugen.

Die Erfindung betrifft zudem einen Domschacht eines Erdlagertanks, wobei Definitionen und Erklärungen zu Begrifflichkeiten des voranstehenden erfindungsgemäßen Verfahrens auch hier Anwendung finden.

Der Domschacht eines Erdlagertanks weist erfindungsgemäß einen Schachtboden und Schachtwände aufweisende Domschachtinnenflächen, sowie zumindest eine eine Domschachtinnenfläche durchdringende Armatur auf, wobei die Domschachtinnenflächen mindestens abschnittsweise eine abdichtende Auskleidung aus einem mit Bindemittel getränktem faserigen Abdichtmaterial aufweisen.

Wie vorangehend beschrieben kommen als Armaturen insbesondere Rohrleitungen, Flansche, Füllstutzen usw. in Betracht. Bevorzugt durchdringen die jeweiligen Armaturen den Schachtboden, es kann jedoch im Rahmen der Erfindung sein, dass Armaturen durch eine oder mehrere Schachtwände in den Domschacht hineinragen oder diesen durchdringen. Ebenfalls ist eine Kombination aus von Armaturen durchdrungenen Schachtwänden und Schachtboden möglich. Auch hier ist es im Rahmen der Erfindung möglich, dass ein Teil der Außenhülle des Erdlagertanks (z.B. der Tankscheitel) den Schachtboden bildet.

Die Auskleidung des erfindungsgemäßen Domschachts liegt an Schachtboden und -wänden zumindest jeweils zumindest abschnittsweise an, und in Kantbereichen von Schachtboden zu Schachtwänden und/oder in Übergangsbereichen zu den Armaturen ist die Auskleidung erfindungsgemäß derart aufgekantet, dass diese die entsprechenden Bereiche übergehend abdeckt.

Gemäß einer bevorzugten Ausführungsform ist auch hier das faserige Abdichtmaterial als Carbonfaser und die Auskleidung als Carbonfasermatte ausgebildet. Vorteile des Materials finden sich wie vorangehend erläutert insbesondere in der chemischen, thermischen und mechanischen Widerstandsfähigkeit von Carbonfasern.

Die Auskleidung wird auch hier bevorzugt aus einzelnen Teilstücken des Abdichtmaterials zusammengefügt. Dies hat insbesondere den Vorteil, dass eine exakte Anpassung der Auskleidung an die räumlichen und topologischen Gegebenheiten im Inneren des Domschachts möglich ist. Gemäß einer weiteren bevorzugten Ausführungsform ist die Carbonfasermatte daher aus einer Mehrzahl einzelner aus Carbonfasern ausgebildeter Mattenstücken ausgebildet, welche jeweils in einem Stoßbereich miteinander verbunden sind. Die Form der Mattenstücken kann dabei beliebig sein. Es kann jedoch vorteilhaft sein, möglichst regelmäßig geformte Mattenstücke einzusetzen, um das Zusammenfügen zu erleichtern. Insbesondere in schwierig zugänglichen und verwinkelten Bereichen, bspw. wenn mehrere Armaturen in einem Bereich nebeneinander durch eine Domschachtinnenfläche treten, kann es jedoch vorteilhaft sein, das dafür entsprechende Mattenstück individuell vor dem Auskleiden anzupassen.

Das vorgenannte Bindemittel soll insbesondere zur Erhöhung der Dichtigkeit und der chemischen Beständigkeit des Abdichtmaterials dienen, so dass gemäß einer weiteren bevorzugten Ausführungsform das Bindemittel als Harz ausgebildet ist. Zu bevorzugten Eigenschaften eines entsprechenden Harzes wird auf die oben bereits getroffenen Erklärungen verwiesen.

Es wurde bereits vorangehend als mögliches Ziel definiert, dass ein mit einer entsprechenden Auskleidung versehener Domschacht über einen möglichst weiten Zeitraum dicht und sicher bleiben soll. Gerade in Chemikalien bzw. Mineralöl lagernden Erdtanks wird mit entsprechend aggressiven Flüssigkeiten hantiert, wobei sich Verschüttungen kaum vermeiden lassen, so dass enorme Anforderungen gerade an die chemische Beständigkeit der Auskleidung zu stellen sind. Gemäß einer weiteren bevorzugten Ausführungsform weist die Auskleidung zur Erhöhung von Dichtigkeit und chemischer Beständigkeit daher eine oberflächliche Versiegelung mittels Polymerbeschichtung auf.

Ausführungsbeispiele der Erfindung werden nachstehend mit Bezug auf Figuren erläutert. Die Figuren zeigen:
Fig. 1 eine perspektivische Schnittansicht eines erfindungsgemäßen Domschachts eines Erdlagertanks;
Fig. 2 eine schematische Schnittansicht eines Domschachts auf einem Erdlagertank gemäß einer Ausführungsform.

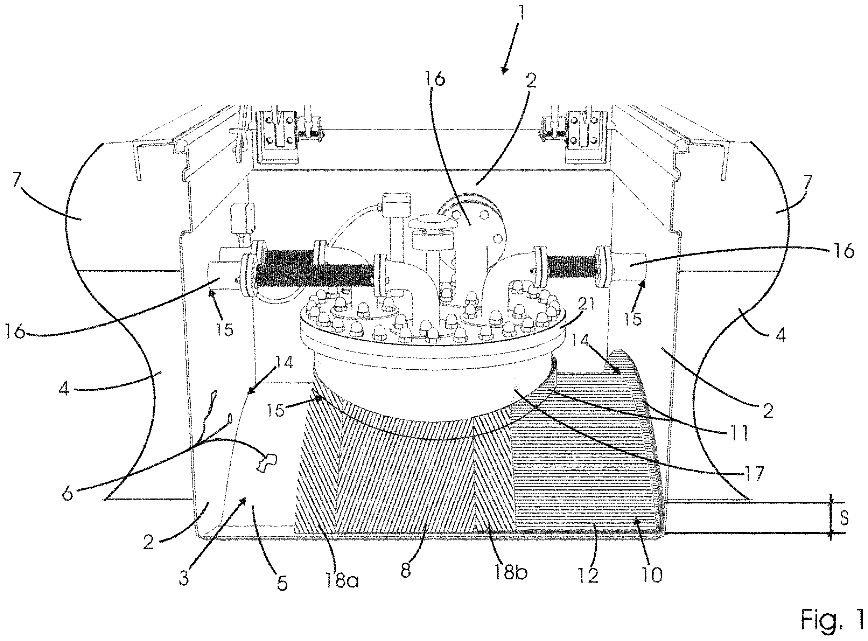

Fig. 1 zeigt beispielhaft einen Domschacht 1 eines hier nicht vollständig dargestellten, Kraftstoff enthaltenden Erdlagertanks, mit Schachtwänden 2 und einem Schachtboden 3. Der Schachtboden 3 ist als Tankscheitel 5 des Erdlagertanks ausgebildet. Entsprechend sitzt der Domschacht 1 hier direkt auf dem Tankscheitel 5 auf. Die Schachtwände 2 sind im Wesentlichen von Erdreich 4 umgeben.

Aus den Schachtwänden 2 ragen Armaturen in Form von Rohrleitungen 16 in den Domschacht 1 hinein. Aus dem Schachtboden 3 bzw. dem Tankscheitel 5 erhebt sich ein dem Erdlagertank zugehöriges Mannloch 17 mit Tankdeckel 21. Die Rohrleitungen 16 führen hier jeweils aus einer der Schachtwände 2 durch den Tankdeckel 21 des Mannlochs 17 in den Erdlagertank.

Fig. 1 illustriert weiter, dass die Schachtwände 2 jeweils den Tankscheitel 5 in einem Kantbereich 14 kontaktieren. Die Schachtwände 2 stehen hier im Wesentlichen rechtwinklig auf dem Tankscheitel 5. Die Schachtwände 2 weisen zudem entsprechende Übergangsbereiche 15 auf, in welchen diese entsprechend winklig in die Rohrleitungen 16 übergehen. Überdies zeigt Fig. 1 beispielhaft einen Übergangsbereich 15 von dem Tankscheitel 5 zu dem Mannloch 17.

Wie Fig. 1 weiter zeigt, sind in dem Tankscheitel 5 und einer der Schachtwände 2 jeweils Fehlstellen 6 ausgebildet. So weist der Tankscheitel eine korrosionsbedingte Fehlstelle 6 auf, welche es Flüssigkeiten erlaubt in die Außenhülle des Erdlagertanks einzudringen. Weiter sind entsprechende Fehlstellen 6 in einer der Schachtwände 2 ersichtlich, durch welche Grund- oder versickerndes Oberflächenwasser in den Domschacht 1 eindringen kann. Um den Einfluss von Oberflächenwasser auf die Schachtwände 2 zu reduzieren ist das Erdreich 4 mit einer Betonversiegelung 7 versehen.

Fig. 1 illustriert weiter den schematischen Aufbau einer Auskleidung 10, mit welcher die Fehlstellen 6 saniert werden können, so dass Betriebssicherheit gegeben ist. Von dem nackten Bereich des abrasiv vorgereinigten Tankscheitels 5 ausgehend weist dieser eine erste Harzbeschichtung 18a auf. Es folgt eine Carbonfasermatte 8, welcher an seiner Unterseite mit der ersten Harzbeschichtung 18a in Wirkverbindung befindlich ist. Auf der Oberseite der Carbonfasermatte 8 ist eine zweite Harzbeschichtung 18b aufgebracht. Beide Harzbeschichtungen 18a,b sind hier als Epoxy-Vinylesterharze ausgebildet. Schließlich zeigt Fig. 1, dass auf der oberen zweiten Harzbeschichtung 18b eine Polymerbeschichtung 12 von ca. 2000µm Dicke aufgebracht ist, welche den vorgenannten Verbund zur Auskleidung 10 versiegelt.

Die Auskleidung 10 bzw. die Carbonfasermatte 8 weist entsprechend der Darstellung in Fig. 1 zudem im vorgenannten Übergangsbereich 15 vom Tankscheitel 5 zum Mannloch 1, sowie im Kantbereich 14 zwischen dem Tankscheitel 5 und der Schachtwand 2 jeweils eine Aufkantung 11 auf. Die Auskleidung 10 ist im Bereich der Aufkantung 11 durchgehend, also ohne Unterbrechung, ausgebildet. Die Auskleidung 10 ist in den entsprechenden Bereichen bis zu einer Schutzhöhe S von hier ca. 10cm aufgekantet. Damit wirkt die Auskleidung wie eine Auffangwanne gegenüber Verschüttungen, Tagwasser, Kondensaten und/oder anderen Flüssigkeiten, so dass keine Chemikalien, hier beispielhaft Kraftstoff, in das Erdreich 4 entweichen können.

Der Domschacht 1 gemäß Fig. 1 weist hier beispielhaft im Querschnitt eine Grundfläche von ca. 0,9m x 0,9m auf. Zur Erzeugung der Auskleidung 10 auf dem Tankscheitel 5 inkl. der entsprechenden Aufkantungen 11 wird hier eine Carbonfasermatte mit einer Fläche von ca. 1,00m², sowie ca. 0,5-0,6 kg des Epoxy-Vinylesterharzes zur Erzeugung der Harzbeschichtungen 18a,b benötigt. Die Auskleidung 10 ist damit flüssigkeitsdicht und überdies insbesondere gegenüber Kraftstoffen (Vergaserkraftstoffe, Diesel) chemikalienbeständig. Die Carbonfasermatte verstärkt die Auskleidung 10 insbesondere gegenüber mechanischer Belastung.

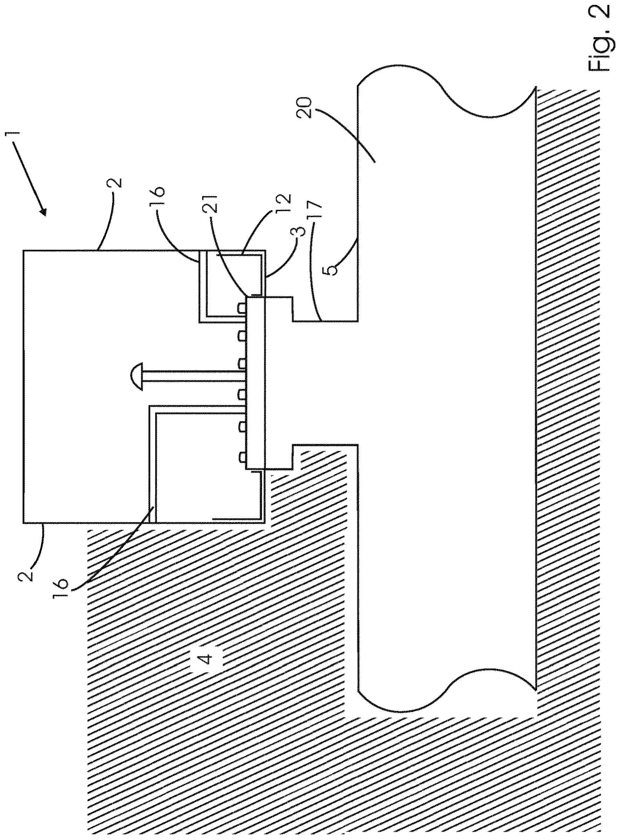

Fig. 2 illustriert beispielhaft einen Domschacht 1 eines Erdlagertanks 20 gemäß einer Ausführungsform. Der Domschacht 1 weist wiederum Schachtwände 2 und einen Schachtboden 3 auf. Der Domschacht 1 sitzt hier jedoch nicht gemäß der Darstellung aus Fig.1 auf dem Tankscheitel 5 auf. Vielmehr ist der Schachtboden 3 mit dem Mannloch 17 verbunden und wird über einen Tankdeckel 21 mit diesem verschraubt. Entsprechend stellt hier die Außenhülle des Erdlagertanks 20 keine direkte Umgebung des Domschachts 1 dar. Hier hat entsprechend der Darstellung in Fig. 2 auch der Schachtboden 3 nach unten in Richtung des Erdlagertanks 20 zumindest teilweise Kontakt zum Erdreich 4.

### Bezugszeichenliste

- 1: Domschacht
- 2: Schachtwände
- 3: Schachtboden
- 4: Erdreich
- 5: Tankscheitel
- 6: Fehlstellen
- 7: Betonversiegelung
- 8: Carbonfasermatte
- 10: Auskleidung
- 11: Aufkantung
- 12: Polymerbeschichtung
- 14: Kantbereich
- 15: Übergangsbereich
- 16: Rohrleitungen
- 17: Mannloch
- 18a: erste Harzbeschichtung
- 18b: zweite Harzbeschichtung
- 20: Erdlagertank
- 21: Tankdeckel
- S: Schutzhöhe

## Patentansprüche

1. Verfahren zur Sanierung eines Domschachts (1), mit den Schritten
- Inspizieren der Dichtigkeit von Domschachtinnenflächen (2,3) des Domschachts (1) gegenüber der Domschachtumgebung (4) zur Identifizierung von Fehlstellen (6),
- abschnittsweises Auskleiden der Domschachtinnenflächen (2,3) des Domschachts (1) zumindest im Bereich der Fehlstellen (6) mit einem faserigen Abdichtmaterial (8),
- Fügen des Abdichtmaterials (8) zur Erzeugung einer zusammenhängenden Auskleidung (10),
- Versiegeln der Auskleidung (10) durch Aufbringen einer Polymerbeschichtung (12), wobei
- die Auskleidung (10) in Kantbereichen (14) der Domschachtinnenflächen (2,3) und/oder in Übergangsbereichen (15) zu die Domschachtinnenflächen (2,3) durchdringenden Armaturen (16,17) übergehend aufgekantet wird.

2. Verfahren nach Anspruch 1, **dadurch gekennzeichnet, dass** die Domschachtinnenflächen (2,3) bis zu einer vorgegebenen Schutzhöhe (S) mit dem Abdichtmaterial (8) ausgekleidet werden.

3. Verfahren nach einem der vorangehenden Ansprüche, **dadurch gekennzeichnet, dass** potentielle Fehlstellen (6) durch Messen von IST-Werten der Materialstärke der Domschachtinnenflächen (2,3) und Vergleichen der IST-Werten mit vorgegebenen SOLL-Werten der Materialstärke der Domschachtinnenflächen (2,3) identifiziert werden.

4. Verfahren nach einem der vorangehenden Ansprüche, **dadurch gekennzeichnet, dass** das Abdichtmaterial (8) vor dem Auskleiden in einem Harz (18a,b) getränkt wird.

5. Verfahren nach einem der vorangehenden Ansprüche, **dadurch gekennzeichnet, dass** die Auskleidung (10) mittels einer Polymerbeschichtung (12) mit einer Dicke zwischen 1500µm und 2500µm, bevorzugt zwischen 1750µm und 2250µm, besonders bevorzugt zwischen 1900µm und 2100µm versiegelt wird.

6. Verfahren nach einem der vorangehenden Ansprüche, **dadurch gekennzeichnet, dass** das faserige Abdichtmaterial (8) als Carbonfaser und die Auskleidung (10) als Carbonfasermatte ausgebildet ist.

7. Verfahren nach einem der vorangehenden Ansprüche, **dadurch gekennzeichnet, dass** die Domschachtinnenflächen (2,3) zur Vorbereitung mit Trockeneispellets bestrahlt werden, denen besonders bevorzugt ein Strahlmittel-Additiv beigemischt wird.

8. Domschacht (1) eines Erdlagertanks (20), mit einen Schachtboden und Schachtwände aufweisenden Domschachtinnenflächen (2,3), sowie zumindest eine eine Domschachtinnenfläche (2,3) durchdringende Armatur (16,17), wobei die Domschachtinnenflächen (2,3) mindestens abschnittsweise eine abdichtende Auskleidung (10) aus einem mit Bindemittel getränktem faserigen Abdichtmaterial (8) aufweisen, welche
- an Schachtboden und -wänden jeweils zumindest abschnittsweise anliegt, und
- in Kantbereichen (14) von Schachtboden zu Schachtwänden und/oder in Übergangsbereichen (15) zu den Armaturen (16,17) derart aufgekantet ist, dass diese die entsprechenden Bereiche übergehend abdeckt.

9. Domschacht (1) nach Anspruch 8, **dadurch gekennzeichnet, dass** das faserige Abdichtmaterial (8) als Carbonfasern und die Auskleidung (10) als Carbonfasermatte ausgebildet ist.

10. Domschacht (1) nach Anspruch 9, **dadurch gekennzeichnet, dass** die Carbonfasermatte aus einer Mehrzahl einzelner aus Carbonfasern ausgebildeter Mattenstücken ausgebildet ist, welche jeweils in einem Stoßbereich miteinander verbunden sind.

11. Domschacht (1) nach einem der Ansprüche, 8-10, **dadurch gekennzeichnet, dass** das Bindemittel als Harz (18a,b) ausgebildet ist.

12. Domschacht (1) nach einem der Ansprüche, 8-11, **dadurch gekennzeichnet, dass** die Auskleidung (10) zur Erhöhung von Dichtigkeit und chemischer Beständigkeit eine Versiegelung mittels Polymerbeschichtung (12) aufweist.

## Claims

1. Method for renovating a dome shaft (1), comprising the steps of
- inspecting the tightness of dome shaft inner surfaces (2, 3) of the dome shaft (1) in relation to the dome shaft surroundings (4) to identify defects (6),
- section-by-section lining of the dome shaft inner surfaces (2, 3) of the dome shaft (1) at least in the area of the defects (6) with a fibrous sealing material (8),
- joining the sealing material (8) to create a continuous lining (10),
- Sealing the lining (10) by applying a polymer coating (12), wherein
- the lining (10) is bent up in edge areas (14) of the dome shaft inner surfaces (2, 3) and/or in transition areas (15) to fittings (16, 17) penetrating the dome shaft inner surfaces (2, 3).

2. Method according to claim 1, **characterized in that** the dome shaft inner surfaces (2, 3) are lined with the sealing material (8) up to a predetermined protective height (S).

3. Method according to one of the preceding claims, **characterized in that** potential defects (6) are identified by measuring ACTUAL-values of the material thickness of the dome shaft inner surfaces (2, 3) and comparing the ACTUAL-values with predetermined TARGET-values of the material thickness of the dome shaft inner surfaces (2, 3).

4. Method according to one of the preceding claims, **characterized in that** the sealing material (8) is soaked in a resin (18a, b) before lining.

5. Method according to one of the preceding claims, **characterized in that** the lining (10) is sealed by means of a polymer coating (12) having a thickness of between 1500µm and 2500µm, preferably between 1750µm and 2250µm, particularly preferably between 1900µm and 2100µm.

6. Method according to one of the preceding claims, **characterized in that** the fibrous sealing material (8) is in the form of a carbon fiber and the lining (10) is in the form of a carbon fiber mat.

7. Method according to one of the preceding claims, **characterized in that** the dome shaft inner surfaces (2, 3) are blasted with dry ice pellets for preparation, to which a blasting media additive is particularly preferably added.

8. Dome shaft (1) of an underground storage tank (20), with dome shaft inner surfaces (2, 3) having a shaft bottom and shaft walls, as well as at least one fitting (16, 17) penetrating a dome shaft inner surface (2, 3), the dome shaft inner surfaces (2, 3) having at least in sections a sealing lining (10) made of a fibrous sealing material (8) soaked with binder, which
- contacts the shaft bottom and walls at least in sections, and
- is bent up in edge areas (14) from the shaft bottom to the shaft walls and/or in transition areas (15) to the fittings (16, 17) in such a way that it covers the corresponding areas in a bridging manner.

9. Dome shaft (1) according to claim 8, **characterized in that** the fibrous sealing material (8) is in the form of carbon fibers and the lining (10) is in the form of a carbon fiber mat.

10. Dome shaft (1) according to claim 9, **characterized in that** the carbon fiber mat is formed from a plurality of individual mat pieces formed from carbon fibers, which are each connected to one another in a joint area.

11. Dome shaft (1) according to one of the claims, 8-10, **characterized in that** the binder is in the form of a resin (18a, b).

12. Dome shaft (1) according to one of the claims, 8-11, **characterized in that** the lining (10) has a sealing by means of polymer coating (12) to increase tightness and chemical resistance.

## Revendications

1. Procédé d'assainissement d'un puits de dôme (1), comprenant les étapes suivantes
- inspecter l'étanchéité des surfaces intérieures du puits de dôme (2, 3) du puits de dôme (1) par rapport à l'environnement du puits de dôme (4) afin d'identifier les défauts (6),
- le revêtement par tronçons des surfaces intérieures du puits de dôme (2, 3) du puits de dôme (1) au moins dans la zone des défauts (6) avec un matériau d'étanchéité fibreux (8),
- coller le matériau d'étanchéité (8) pour créer un revêtement cohérent (10),
- sceller le revêtement (10) en appliquant un revêtement polymère (12), dans lequel
- le revêtement (10) est plié par pontage dans des zones d'arête (14) des surfaces intérieures du puits de dôme (2, 3) et/ou dans des zones de transition (15) vers des armatures (16, 17) qui pénètrent dans les surfaces intérieures du puits de dôme (2, 3).

2. Procédé selon la revendication 1, **caractérisé en ce que** les surfaces intérieures du puits de dôme (2, 3) sont revêtues du matériau d'étanchéité (8) jusqu'à une hauteur de protection (S) prédéterminée.

3. Procédé selon l'une des revendications précédentes, **caractérisé en ce que** des défauts potentiels (6) sont identifiés en mesurant des valeurs réelles de l'épaisseur du matériau des surfaces intérieures du puits de dôme (2, 3) et en comparant les valeurs réelles à des valeurs-cibles prédéterminées de l'épaisseur du matériau des surfaces intérieures du puits de dôme (2, 3).

4. Procédé selon l'une quelconque des revendications précédentes, **caractérisé en ce que** le matériau d'étanchéité (8) est imprégné d'une résine (18a, b) avant le revêtement.

5. Procédé selon l'une quelconque des revendications précédentes, **caractérisé en ce que** le revêtement (10) est scellé au moyen d'un revêtement polymère (12) d'épaisseur comprise entre 1500µm et 2500µm, de préférence entre 1750µm et 2250µm, plus préférentiellement entre 1900µm et 2100µm.

6. Procédé selon l'une des revendications précédentes, **caractérisé en ce que** le matériau d'étanchéité fibreux (8) est réalisé sous forme de fibres de carbone et le revêtement (10) sous forme de tapis en fibres de carbone.

7. Procédé selon l'une des revendications précédentes, **caractérisé en ce que** les surfaces intérieures du puits de dôme (2, 3) sont irradiées pour la préparation avec des granulés de glace carbonique auxquels est mélangé de manière particulièrement préférée un additif de sablage.

8. Puits de dôme (1) d'un réservoir de stockage souterrain (20), avec des fonds de puits (2, 3) présentant un fond de puits et des parois de puits, ainsi qu'au moins une armature (16, 17) pénétrant dans un fond de puits (2, 3), les fonds de puits (2, 3) présentant au moins par sections un revêtement d'étanchéité (10) en un matériau d'étanchéité fibreux (8) imprégné d'un liant,
- qui est en contact au fond du puits et aux parois du puits, au moins par sections, et
- qui dans des zones d'arête (14) du fond du puits aux parois du puits et/ou dans des zones de transition (15) vers les armatures (16, 17), est plié vers le haut de telle sorte que celui-ci recouvre les zones correspondantes en formant un pont.

9. Puits de dôme (1) selon la revendication 8, **caractérisé en ce que** le matériau d'étanchéité fibreux (8) est réalisé sous forme de fibres de carbone et le revêtement (10) sous forme de tapis en fibres de carbone.

10. Puits de dôme (1) selon la revendication 9, **caractérisé en ce que** le tapis en fibres de carbone est formé d'une pluralité de pièces de tapis individuelles formées de fibres de carbone, qui sont respectivement reliées entre elles dans une zone d'about.

11. Puits de dôme (1) selon l'une des revendications 8 à 10, **caractérisé en ce que** le liant est une résine (18a, b) .

12. Puits de dôme (1) selon l'une des revendications 8 à 11, **caractérisé en ce que** le revêtement (10) présente un scellement au moyen d'un revêtement polymère (12) pour augmenter l'étanchéité et la résistance chimique.
